Europäisches Patentamt

(19) European Patent Office

Office européen des brevets

(11) Numéro de publication: **0 178 205**

**B1**

(12) **FASCICULE DE BREVET EUROPEEN**

(45) Date de publication du fascicule du brevet: **11.04.90**

(51) Int. Cl.⁵: **H 04 L 12/40,** G 06 F 13/36

(21) Numéro de dépôt: **85401771.2**

(22) Date de dépôt: **12.09.85**

(54) **Réseau numérique à accès multiples.**

(30) Priorité: **12.09.84 FR 8414012**

(43) Date de publication de la demande:
**16.04.86 Bulletin 86/16**

(45) Mention de la délivrance du brevet:
**11.04.90 Bulletin 90/15**

(84) Etats contractants désignés:
**BE DE GB IT NL**

(56) Documents cités:
**DE-A-3 248 446**
**US-A-3 445 822**
**US-A-4 453 229**

**NEW ELECTRONICS, vol. 17, no. 8, 17 avril 1984, pages 27,28,31,33, Londres, GB; T. DANBURY: "D2B - A digital data bus for small area networks"**

**ELECTRONIC DESIGN, vol. 32, no. 15, 26 juillet 1984, pages 171-176,178, Waseca, US; W. BOURGONJE: "Twisted-pair bus carries speech, data, text, and images"**

(73) Titulaire: **ETAT FRANCAIS représenté par le Ministre des PTT (Centre National d'Etudes des Télécommunications)**
**38-40 rue du Général Leclerc**
**F-92131 Issy-les-Moulineaux (FR)**

(72) Inventeur: **Le Hir, Jean-Pierre**
**Prat Foucaud Bras**
**F-22700 Perros Guirec (FR)**
Inventeur: **Auvray, Patrick**
**Chemin des Landes Le Rhu-Servel**
**F-22300 Lannion (FR)**
Inventeur: **Menard, Jacky**
**M 22 Ar Santé**
**F-22300 Lannion (FR)**

(74) Mandataire: **Martinet & Lapoux**
**62, rue des Mathurins**
**F-75008 Paris (FR)**

Courier Press, Leamington Spa, England.

**Description**

La présente invention concerne un réseau numérique du genre à accès multiples dit également à bus distribué bidirectionnel, entre des stations de transmission et de réception de messages.

Selon la technique antérieure, le bus distribué dans un tel réseau constitue un support de transmission pour échanger des messages entre les stations mais également entre les stations et une station particulière dite de commande, appelée également allocateur. En général, la transmission numérique des messages dans le support est organisée en trames de canaux ou de paquets. Une station de transmission et de réception ne peut transmettre un message qu'après avoir reçu un ordre de la station de commande. En effet, la station de commande a pour but de gérer les conflits d'accès des stations de transmission et de réception au support de transmission, au moyen d'une mémoire d'adresses des stations. Pour qu'une station de transmission et de réception introduise un message dans le support de transmission, la station de commande doit transmettre l'adresse de ladite station qui est alors reconnue par ladite station en vue de transmettre un message, si elle le désire. Toutes les stations reçoivent le message et seule une station destinataire à laquelle est destinée le message capte le message en ayant reconnu son adresse au début du message. Les adresses des stations de transmission et de réception sont délivrées cycliquement ou parfois dynamiquement en fonction de l'activité des stations, par la station de commande.

Ainsi, pour transmettre un message d'une station vers une autre station de transmission et de réception, la station transmettant le message doit attendre un ordre d'invitation à transmettre en provenance de la station de commande. Ces conditions confèrent une perte de temps, d'une part lorsqu'une station doit transmettre rapidement un message, et d'autre part, lorsque certaines stations n'ont aucun message à transmettre en réponse à leurs adresses délivrées par la station de commande, respectivement.

En outre, dans un tel réseau, il est nécessaire de prévoir une station très particulière et complexe, faisant office de la station de commande.

La demande de brevet allemand DE—A—3248446 remédie à cet inconvénient en proposant un réseau numérique synchrone à commande décentralisée dans lequel les conflits d'accès à un fil conducteur de transmission de message sérialisé sont gérés directement par les stations, ce qui présente l'avantage de supprimer la station de commande. La nature synchrone de ce réseau implique qu'un signal d'horloge de bit de message est transmis dans un fil conducteur spécifique et distribué en permanence à toutes les stations afin de synchroniser celles-ci. Par suite une gestion des demandes d'accès relativement à ce fil est directement dépendant de la fréquence binaire d'horloge. Un tel réseau numérique est du genre de celui défini dans le préambule de revendication 1.

Dans ce réseau, les stations désirant transmettre un message émettent un signal de demande d'accès sur un second fil dit de signalisation. Avant toute demande de transmission, chaque station examine la présence de signaux de demande dans le second fil pendant une période du signal d'horloge. Ainsi, les demandes de transmission sont synchrones de fronts montants (ou descendants) du signal d'horloge ce qui provoque systématiquement un conflit d'accès pour toutes demandes de transmission émanant de stations et intervenant entre deux fronts successifs du signal d'horloge séparés par une période de signal d'horloge. Si, en pratique, on considère une horloge à 2 MHz, et un temps de réponse de demande d'accès de l'ordre de quelques dizaines de nanosecondes au plus, la probabilité de plusieurs demandes d'accès par des stations est très grande pendant une période d'horloge de 0,5 μs.

Après l'établissement de signaux de demande, les stations en conflit émettent des signaux de priorité respectifs constitués chacun d'une série de bits formant un mot de priorité, dans le premier fil de transmission de message. Le premier bit du mot de priorité est synchrone avec le front d'horloge montant succédant à la demande de transmission. Chaque station ayant demandé une transmission compare successivement bit à bit le mot de priorité détecté dans le premier fil et son mot de priorité propre, et, dès que l'une des comparaisons de bit révèle une inégalité, la station se retire de l'accès du premier fil et n'effectue pas les comparaisons de bit suivantes. Seule la station prioritaire n'ayant détecté que des égalités entre bits comparés deux à deux est autorisée à transmettre un message. Les mots de priorité sont choisis d'une manière quelconque et ne répondent pas à certaines caractéristiques classiques dans les réseaux numériques, dans lesquels les mots sont des octets précédés par un bit de start et terminés par un bit de stop. En outre, une comparaison bit à bit dans une station ayant pour résultat une inégalité déclenche la perte de l'accès de cette station au premier fil et l'arrêt de la comparaison du reste du mot de priorité propre à la station; en cas de défaut de transmission engendrant un bit erroné dans le mot de priorité détecté, une collision de messages peut alors intervenir.

Par ailleurs, il est à noter que la demande de brevet allemand précitée ne décrit qu'un procédé d'accès de station au fil de transmission de message, ce qui ne permet pas de déduire des moyens de mise en ouvre de ce procédé, d'autant plus que ceux-ci sont à priori complexes.

Le brevet US—A—3445822 décrit un réseau du type synchrone à bus à plusieurs conducteurs parallèles distribué entre plusieurs processeurs. Lorsqu'un processeur désire transmettre des données, il produit dans le bus un mot de code prise à bits parallèles, et le relit pour le comparer avec le mot transmis. Si les mots de code transmis et lu sont égaux, le processeur prend le bus. Si les mots de code ne sont pas égaux, ceci indique qu'il y a au moins deux processeurs en conflit pour accéder au bus. Dans ce cas, chaque processeur en conflit transmet au moins un octet de priorité à bits parallèles, le compare avec celui détecté

EP 0 178 205 B1

dans le bus de données et prend la bus lorsque les octets de priorité transmis et reçu sont égaux afin de transmettre un message d'octets de données.

D'une manière analogue au DE—A—3248446, les cycles de transmission, lecture et comparaison de mots de code et de mots de priorité dans tous les processeurs selon le US—A—3445822 sont synchrones grâce à des trains d'impulsion d'horloge transmis à tous les processeurs par le bus.

La présente invention vise donc à fournir un réseau numérique tel que défini dans le préambule de la revendication 1, permettant de réduire considérablement les possibilités de conflits d'accès en utilisant une techique de transmission de message du type asynchrone entre les stations et indépendante d'une quelconque horloge.

A cette fin, un réseau numérique selon l'invention est tel que caractérisé dans le revendication 1.

Selon l'invention, la première durée prédéterminée est en pratique de l'ordre des temps de propagation d'éléments électroniques inclus dans les moyens de changement d'état. Il en résulte que, selon l'invention, deux demandes de transmission de message provenant d'au moins deux stations quelconques doivent être quasi-synchrones pour être en conflit d'accès au premier fil de transmission de message. Un tel évènement a donc une probabilité très faible.

La seconde durée prédéterminée succédant à la première durée est également très courte et est utilisée pour élaborer et transmettre un mot de priorité. Dans ces conditions, la procédure de conflit d'accès est effectuée très rapidement à la suite d'une demande de transmission, sans attendre un quelconque front de signal d'horloge. Le caractère asynchrone du réseau selon l'invention confère ainsi une réduction de l'occupation du fil de transmission de message comparativement au réseau synchrone.

Selon un autre aspect de l'invention, les conflits d'accès des stations au premier fil de transmission sont résolus par les caractéistiques énoncées dans la revendication 2. La transformation de mot de priorité est réalisée grâce à des liaisons entre des entrées et sorties de messages des stations et le premier fil de transmission du genre liaison à "collecteur ouvert", dite également liaison à "ET câblé".

D'autres caractéristiques et avantages de l'invention apparaîtront plus clairement à la lecture de la description suivante de plusieurs réalisations préférées de l'invention en référence aux dessins annexés correspondants dans lesquels:

— la Fig. 1 est un bloc-diagramme schématique d'un réseau numérique asynchrone comprenant des stations de transmission et de réception ainsi que des stations de réception;

— les Figs. 2A et 2B sont un bloc-diagramme détaillé d'une interface dans une station de transmission et de réception pour accéder à un fil de transmission de messages du réseau; et

— la Fig. 3 est un bloc-diagramme schématiquement d'un réseau numérique asynchrone selon l'invention, utilisé dans un poste téléphonique numérique.

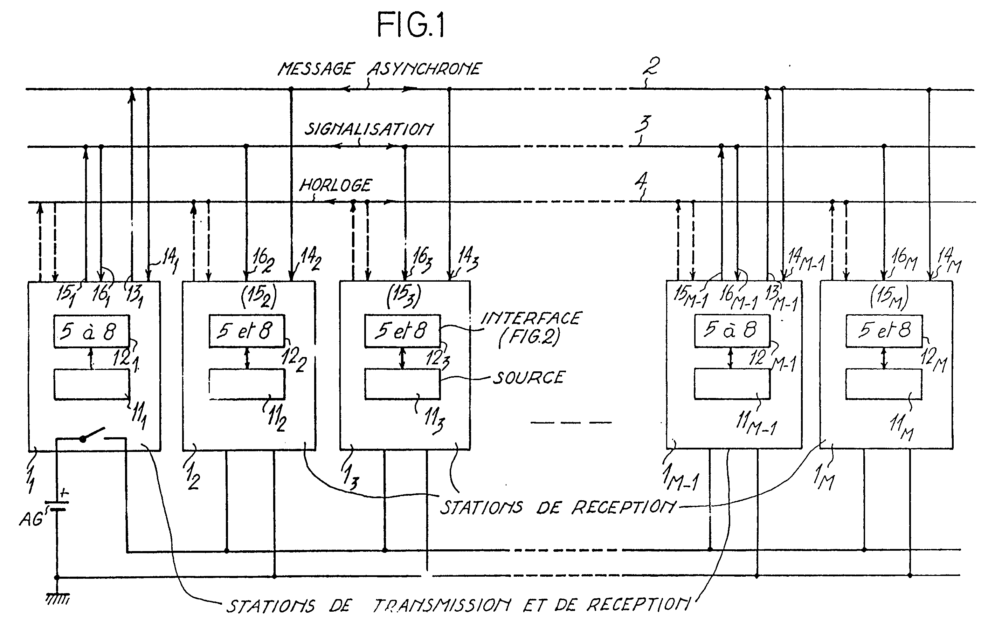

En référence à la Fig. 1, M stations $1_1$ à $1_M$ dans un réseau numérique asynchrone selon l'invention sont reliées entre elles par deux fils de transmission bidirectionnels 2 et 3. Le premier fil de transmission 2 convoie des messages sérialisés d'informations numériques ayant un débit prédéterminé D, échangés entre les stations. Le second fil de transmission 3 transite un signal de signalisation logique ayant deux états. Un premier état du signal de signalisation, tel que l'état logique haut "1", indique qu'aucun message n'est transmis dans le fil 2. Un second état du signal de signalisation, tel que l'état logique bas "0", indique qu'un message est convoyé dans le fil 2. Le cas échéant, un troisième fil de transmission 4 est prévu entre les stations $1_1$ à $1_M$ pour transmettre un signal d'horloge à partir de l'une des stations vers les autres stations; dans ce cas, l'une des stations comprend un oscillateur local et les autres stations récupèrent le signal d'horloge, sans faire appel à un oscillateur local. Le signal d'horloge a une fréquence supérieure au débit binaire des informations dans le fil 2 et est asynchrone avec les demandes de transmission émanant des stations.

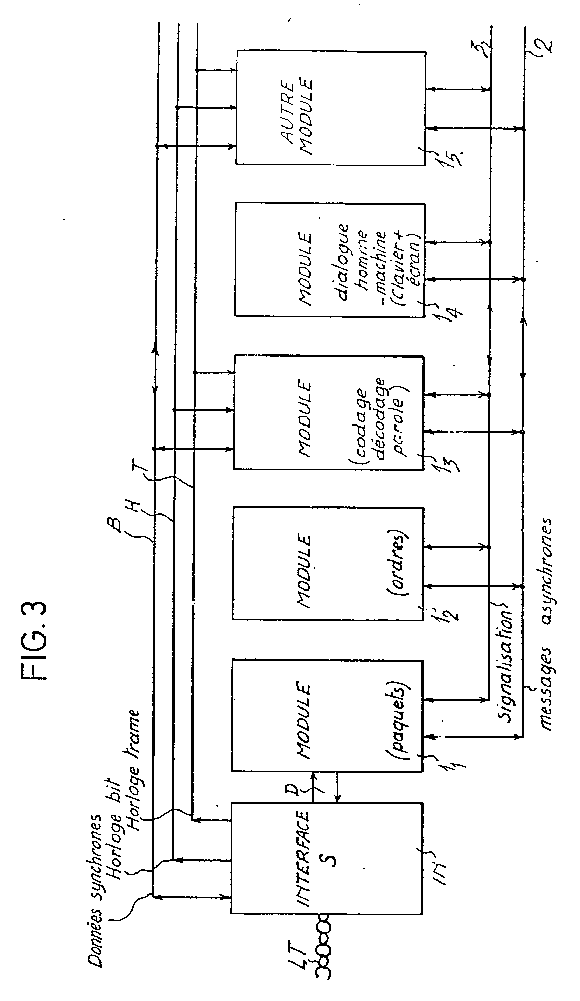

Les fils 2, 3 et 4 peuvent être constitués chacun par un conducteur imprimé lorsque les stations sont des modules de circuits intégrés implantés sur une carte de circuit imprimé comme on le verra dans la suite en référence à la Fig. 3, ou par un câble coaxial lorsque les stations sont des entités, telles que terminaux, relativement éloignées. Les informations numériques sont transmises sous forme de mots sérialisés à N + 3 bits dans le fils 2, N étant un entier.

Toutes les stations $1_1$ à $1_M$ comprennent une source d'utilisation $11_1$ à $11_M$ et une interface $12_1$ à $12_M$ entre la source et la liaison asynchrone 2-3-4. Comme on le verra en détail dans la suite, la source d'utilisation est un terminal proprement dit de données qui accomplit des tâches qui lui sont propres et qui échange des informations avec les autres stations à travers l'interface associée. L'interface constitue des moyens d'accès de la source associée à la liaison asynchrone et ainsi, gère les transmissions des informations demandées par la source associée et les réceptions des informations transmises par les autres sources et destinées à la source associée. Certaines stations dites de transmission et de réception, telles que les stations $1_1$, $1_{M-1}$ dans la Fig. 1, ont la faculté de transmettre par des sorties $13_1$, $13_{M-1}$ des interfaces associées $12_1$, $12_{M-1}$ et de recevoir par des entrées $14_1$, $14_{M-1}$ des interfaces associées $12_1$, $12_{M-1}$ des messages d'informations via le fil 2. D'autres stations dites de réception, telles que les stations $1_2$, $1_3$, $1_M$ dans la Fig. 1, ne peuvent que recevoir des messages d'informations à une entrée $14_2$, $14_3$, $14_M$ de l'interface associée $12_2$, $12_3$, $12_M$, via le fil 2. Les sorties et entré es des interfaces $12_1$ à $12_M$ sont reliées au fil 2 par des liaisons bidirectionnelles du type à "collecteur ouvert", réalisant des "ET câblés".

Chaque message d'informations est transmis dans le fil de transmission asynchrone 2 par l'une des stations de transmission vers toutes les autres stations. Cependant, seule une station dite destinataire à

3

## EP 0 178 205 B1

laquelle est destinée le message, capte et traite les informations contenues dans le message. Un message est composé d'un en-tête suivi d'un champ d'informations transmis par une source d'utilisation et destiné à une autre source d'utilisation. L'en-tête est principalement traité par les interfaces. Comme on le verra dans la suite, un en-tête comprend un premier mot dit de priorité et un second mot contenant une adresse d'une station destinataire. Le champ d'information est composé d'une suite de mots d'information proprement dits en nombre toujours inférieur à un entier prédéterminé. Dans la suite, on suppose que chaque mot comporte $N + 3 = 11$ bits dont un premier bit est un bit de start et dont deux derniers bits sont un bit de parité et un bit de stop. Les $N = 8$ bits restants dans chaque mot forme un octet d'information.

A la mise sous tension de l'ensemble des stations du réseau par l'intermédiaire d'au moins une station d'alimentation, telle que la station $1_1$ dans la Fig. 1, reliée à une alimentation de tension générale AG, la station d'alimentation $1_1$ met le fil 3 à l'état bas "0" par une sortie $15_1$ de l'interface $12_1$ associé à la station $1_1$. Tant qu'au moins une station $1_2$ à $1_M$ n'est pas en condition de fonctionnement normal, une sortie $15_2$ à $15_M$ de l'interface $12_2$ à $12_M$ associée à la section maintient le fil 3 à l'état bas. Dès que toutes les stations $1_1$ à $1_M$ sont en condition de fonctionnement, les sorties $15_1$ à $15_M$ et entrées $16_1$ à $16_M$ des interfaces $12_1$ à $12_M$ de celles-ci sont à l'état haut "1", et les entrées $16_1$ à $16_M$ des interfaces $12_1$ à $12_M$ permettent de détecter cet état haut dans le fil 3. Ceci indique que toutes les sources d'utilisation $11_1$ à $11_M$ des stations sont sous tension et en fonctionnement normal. A partir de cet instant, des messages peuvent être échangés entre les stations. On notera que les sorties $15_1$ à $15_M$ et les entrées $16_1$ à $16_M$ des stations $1_1$ à $1_M$ sont également reliés au fil de transmission bidirectionnel de signalisation 3 par des liaisons bidirectionnelles du type à "collecteur ouvert".

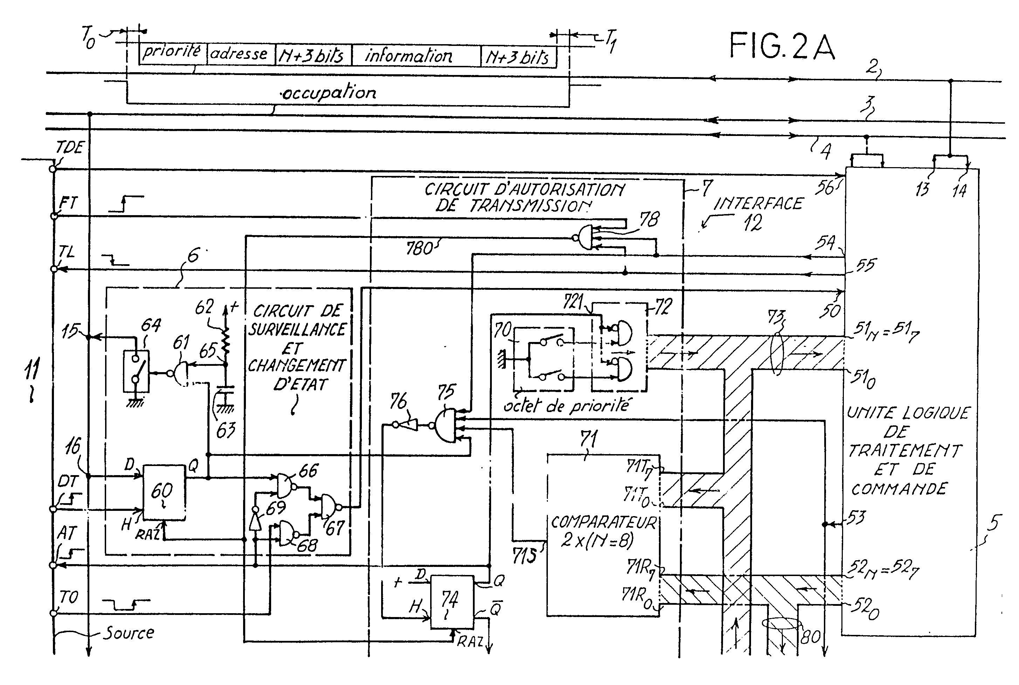

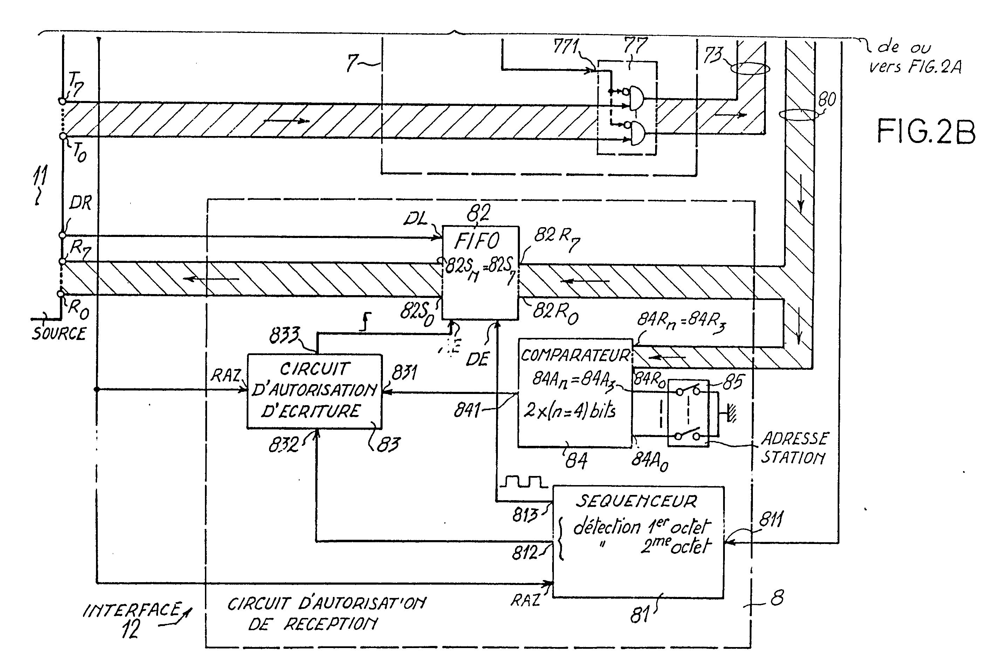

Pour décrire une transmission de message d'informations entre une station de transmission et une station de réception, on se réfère dans la suite au bloc-diagramme d'une réalisation préférée d'une interface 12 dans une station de transmission et de réception montrée aux Figs. 2A et 2B. La source 11 de la station de transmission et de réception n'est pas décrite en détail ci-après, car la structure de la source comprenant un ou plusieurs microprocesseurs peut être en soi connue et dépend principalement des tâches effectuées par celles-ci. Seules les liaisons entre la source 11 et l'interface 12 sont décrites.

L'interface 12 selon la réalisation illustrée aux Figs. 2A et 2B comprend une unité logique de traitement et de commande 5, sous la forme d'un circuit intégré connu du genre UART ("Universal Asynchronous Receiver Transmitter"), qui, conjointement à des circuits auxiliaires 6, 7 et 8 également inclus dans l'interface 12, gère les échanges de message entre la source associée 11 et les autres stations. Le circuit 6 est un circuit de surveillance et de changement d'état du fil de signalisation 3, en vue de valider une demande de transmission de message délivrée par la source associée 11 seulement lorsque le fil 3 est à l'état haut "1". Le circuit 7 est un circuit d'autorisation de transmission de message à partir de la source associée 11 vers le film de message 2 à travers l'unité 5, afin que la source 11 ne transmette un message que lorsque le fil 3 est libre. Le circuit 8 est un circuit d'autorisation de réception de message vers la source associée 11 à partir du support de message 2 à travers l'unité 5, afin que la source 11 ne reçoive que des messages que lui sont destinés.

Il est à noter que dans une station de réception, telle que la station $1_2$, $1_3$ ou $1_M$ montrée à la Fig. 1, l'interface associée ne comprend qu'une unité logique de traitement et de commande 5 et un circuit d'autorisation de réception de message 8.

Avant toute transmission d'un message dans le fil 2, une station de transmission examine l'état du fil de signalisation 3. Cet examen est effectué par le circuit de surveillance et de changement d'état 6 pendant une durée très courte $\varepsilon$ en reponse à un front montant transmis par une sortie de demande de transmission DT de la source associée 11. Comme montré à la Fig. 2A, le circuit 6 comprend une bascule du type D 60, une porte NON-ET 61, une résistance 62 et un condensateur 63 en série entre des bornes positive et négative (ou de terre) de l'alimentation générale AG, et une porte analogique 64. Deux entrées de la porte NON-ET 61 sont reliées à une sortie Q de la bascule 60 et à une borne commune 65 à la résistance 62 et au condensateur 63, respectivement. Une sortie de la porte NON-ET 61 commande la porte analogique 64, équivalente à un interrupteur interconnecté entre la terre et la sortie 15 de l'interface reliée au fil de signalisation 3. Une entrée D de la bascule 60 est reliée au fil 3 à travers l'entrée 16 de l'interface.

Suite au front montant transmis par la sortie DT de la source associée 11, changeant l'état "0" à l'état "1" d'une entrée d'horloge H de la bascule 60, la sortie Q de la bascule 60 passe à l'état "1" si le fil 3 est à l'état "1" indiquant que le support 2 ne convoie pas de message et est disponible pour toute transmission de message. Dans ce cas, la porte ET-NON 61 ferme la porte analogique 64 et l'état du fil de signalisation 3 passe à "0", ce qui signale la prise du fil 3 par la station considérée aux autres stations du réseau. La durée $\varepsilon$ entu l'instant où la demande de transmission de message DT est appliqué à l'entree H de la bascule 60 et l'instant où la porte analogique 64 est très courte, et ne dépend que du temps de propogation des composants electroniques dans le circuit 6. Le fil 3 est maintenu à l'état à "0" par le circuit 6 de la station de transmission considérée si le premier octet dans l'en-tête du message est validé par le circuit d'autorisation de transmission 7, comme on le verra dans la suite. L'état "1" de la sortie Q de la bascule 60 signalant la demande de transmission de message est appliqué à une entrée 50 de l'unité 5 à travers deux portes NON-ET 66 et 67.

Au contraire, si l'état du fil de signalisation 3 est à "0" lorsque la demande de transmission est délivrée par la borne DT de la source 11, la sortie Q de la bascule 60 est maintenue à "0". L'état "0" du fil 3 resulte d'une transmission de message antérieure par une autre station. La porte ET 61 maintient ouverte la porte

4

EP 0 178 205 B1

analogique 64, ce qui ne modifie pas l'état logique "0" du fil 3 grâce aux liaisons en "collecteur ouvert" de la sortie 15 et du fil 3. L'état "0" de la sortie Q de la bascule 60 est appliqué à l'entrée 50 de l'unité 5 à travers les portes 66 et 67. L'unité 5 interdit alors toute transmission de message par la source 11 en maintenant à l'état "0" une entrée d'autorisation de transmission AT de la source 11 par l'intermédiaire du circuit 7. Dans ce cas, la source peut réitérer cycliquement une demande de transmission jusqu'à une prise possible du fil 2 et être affectée à d'autres tâches en attendant l'autorisation de transmission à la borne AT.

Après le passage de l'entrée 50 de l'unité 5 de l'état "0" à l'état "1", à la fin de la durée ε, l'unité 5 de la station de transmission élabore un premier mot dit de priorité propre à la station considérée et transmet celui-ci dans le fil 2 après une second durée predéterminé $T_0$. Le premier mot du message contient un octet de priorité qui est délivré par une mémoire morte d'octet de priorité 70 vers des entrées parallèles $51_0$ à $51_7$ de l'unité 5 et des premières entrées $71T_0$ à $71T_7$ d'un comparateur logique d'octets 71 à travers un circuit de transfert 72 à huit portes ET et un bus de transmission à haut conducteurs. Les éléments précités 70, 71 et 72 ainsi qu'une bascule du type D 74, une porte NON-ET 75 à quatre entrées, un inverseur 76, un second circuit de transfert 77 à huit portes ET et une porte NON-ET 78 à trois entrées sont inclus dans le circuit d'autorisation de transmission 7 montré aux Figs. 2A et 2B. Tant qu'aucune autorisation de transmission n'est présente à l'entrée AT de la source 11, une sortie Q de la bascule 74 maintient à l'état "0" une entrée d'inhibition 721 du circuit de transfert 72, et le circuit de transfert 72 devient passant pour transférer l'octet de priorité de la mémoire 70 vers les entrées $51_0$ à $51_7$ de l'unité 5. La mémoire morte 70 peut être un circuit précâblé, comme illustré à la Fig. 2, ou une mémoire programmable PROM. Ainsi, pendant la durée $T_0$ succédant à la validation de la demande de transmission à l'entrée 50, l'unité 5 compose le premier mot et le transmet dans le fil de transmission de message 2 à travers la sortie 13 de la station. La composition du premier mot, ou plus généralement, la composition d'un mot de N + 3 = 11 bits à partir d'un octet délivré par le bus de transmission 73 est effectuée dans l'unité 5 et consiste à adjoindre un bit de start, un bit de parité et un bit de stop à l'octet. Réciproquement, la réception d'un octet par l'unité 5 à partir d'un mot transmis par le support 2 à travers l'entrée 14 de la station, consiste à extraire un bit de start, un bit de parité et un bit de stop du mot et à valider l'octet reçu en fonction de ces bits d'une manière connue.

La transmission du premier octet dans le fil de transmission de message 2 est destinée à résoudre les conflits d'accès qui peuvent apparaître pendant une durée ε entre deux stations de transmission et de réception qui désirent transmettre des messages simultanément. Dans ce cas, les circuits de surveillance et de changement d'état 6 des deux stations mettent quasiment simultanément le fil de signalisation 3 à l'état "0" pendant la durée ε, ce qui place toutes les stations et notamment les deux stations considérées en "mode de réception". Dans ce cas, si deux messages sont transmis par les deux stations de transmission et de réception dans le fil 2 après un temps $T_0 \pm ε$ c'est-à-dire sont transmis en pseudosynchronisme, les messages et donc les octets de ces messages reçus par les autres stations sont erronés en raison de l'opération logique ET effectuée sur les deux messages et due aux liaisons en "collecteur ouvert" entre les bornes 13 et 14 des stations et le fil 2. Il est donc nécessaire de stopper repidement la transmission de message par l'une des deux stations. Ce problème est résolu, selon la présente invention, grâce à la transmission d'un premier octet de priorité avant toute transmission d'information proprement dite dans un message par une station, et à la relecture du premier octet par ladite station. Le relecture de l'octet de priorité consiste à comparer dans le comparateur 71 l'octet de priorité délivré par la mémoire 70 et transmis dans le fil 2 par l'unité 5 de la station et un octet reçu par l'unité 5 à travers l'entrée 14 et délivré par des sorties $52_0$ à $52_7$ de l'unité 5 vers des secondes entrées $71R_0$ à $71R_7$ du comparateur 71 à travers un bus de réception 80, comme montré à la Fig. 2A.

Chacune des deux stations de transmission et de réception transmettant des messages simultanément ou quasimultanément ne commence donc pas à transmettre un mot d'adresse de station destinataire, comme dans la plupart de stations de réseaux asynchrones connus, mais transmet avant un mot d'adresse de station destinataire, un mot de priorité représentatif de l'adresse de ladite station. Cependant, si les sources d'utilization dans les deux stations ont une même structure, le conflit détecté par une comparaison négative du premier octet transmis et du premier octet reçu et susceptible d'arrêter la transmission peut être réitéré indéfiniment si les deux stations tentent à nouveau d'accéder au fil 2. En outre, ce genre de conflit d'accès est une perte de temps car les deux stations arrêtent momentanément les tâches en cours.

Afin de remédier à la réitération du conflit d'accès, la présente invention prévoit de classer les stations de transmission et de réception selon un ordre de priorité, afin que la station la plus prioritaire parmi deux stations, ou le cas échéant, parmi plusieurs stations désirant transmettre simultanément des messages, prenne obligatoirement le fil 2 et afin que l'autre station arrête toute transmission de message. Ladite autre station n'est alors susceptible d'accéder au fil 2 qu'après la fin de la transmission du message de la station la plus prioritaire et le changement d'état "0" à "1" du fil de signalisation 3 par la station la plus prioritaire. Selon l'invention, un octet de priorité comporte d'une manière générale une série de bits "0" consécutifs suivi d'une série de bits "1" consécutifs. L'octet de priorité assigné à la station la plus prioritaire ne comporte que des bits "0" et l'octet de priorité assignée à la station la moins prioritaire ne comporte que des bits "1". Le tableau I suivant indique les octets de priorité par ordre décroissant de priorité des stations de transmission et de réception.

# EP 0 178 205 B1

## TABLEAU I

| Numéro d'ordre de priorité des stations | Octet de priorité | | | | | | | |
|---|---|---|---|---|---|---|---|---|
| 1 | 0 | 0 | 0 | 0 | 0 | 0 | 0 | 0 |
| 2 | 0 | 0 | 0 | 0 | 0 | 0 | 0 | 1 |
| 3 | 0 | 0 | 0 | 0 | 0 | 0 | 1 | 1 |
| 4 | 0 | 0 | 0 | 0 | 0 | 1 | 1 | 1 |
| 5 | 0 | 0 | 0 | 0 | 1 | 1 | 1 | 1 |
| 6 | 0 | 0 | 0 | 1 | 1 | 1 | 1 | 1 |
| 7 | 0 | 0 | 1 | 1 | 1 | 1 | 1 | 1 |
| 8 | 0 | 1 | 1 | 1 | 1 | 1 | 1 | 1 |
| 9 | 1 | 1 | 1 | 1 | 1 | 1 | 1 | 1 |

Selon une autre variante, les octets de priorité comportent d'une manière générale une série de bits "1" consécutifs suivie d'une série de bits "0" consécutifs.

D'une manière générale, si les mots de message ont N + 3 bits sérialisés et contiennent des mots à N bits transmis directement par les sources, le réseau numérique asynchrone ne peut comprendre qu'au plus N + 1 stations de transmission et de réception.

En utilisant les octets de priorité selon le tableau I, il apparaît que l'opération "ET câblé" appliquée à un octet de priorité assigné à une première station et à un octet de priorité assigné à une seconde station moins prioritaire que la première station, c'est-à-dire assigné à une seconde station affectée d'un numéro d'ordre de priorité supérieur à celui affecté à la première station, permet de ne transmettre que l'octet de priorité de la première station dans le fil 2.

En se référant à nouveau aux Figs. 2A et 2B au sujet d'une station de transmission et de réception dont l'unité 5 a transmis l'octet de priorité de la station, une sortie 53 de l'unité 5 met à l'état "1" une première entrée de la porte NON-ET 75 ainsi qu'une entrée 811 d'un séquenceur 81 dans le circuit 8, suite à la réception par l'unité 5 de l'octet transmis par cette dernière consécutivement à la demande de transmission à la borne 50. Une autre sortie 54 de l'unité 5 reliée à une première entrée de la porte NON-ET 78 et à une seconde entrée de la porte NON-ET 75 passe à l'état "1". Ce dernier changement d'état de la sortie 54 a lieu chaque fois qu'un octet est validé et à été transmis par l'unité 5. D'autre part, le premier octet reçu par l'unité 5 est délivré par les bornes $52_0$ à $52_7$ vers les bornes $71R_0$ à $71R_7$ à travers le bus 80. Le comparateur 71 compare l'octet de priorité de la station transmis délivré par le mémoire 70 et l'octet reçu. Si la comparaison est positive et donc si l'octet reçu est identique à l'octet transmis, une sortie 71S du comparateur 71 met à l'état "1" une troisième entrée de la porte NON-ET 75. Une quatrième entrée de la porte 75 est reliée à la sortie Q de la bascule 60 et est donc également à l'état "1". Toutes les entrées de la porte 75 sont donc à l'état "1", ce qui permet d'appliquer un "1" à une entrée d'horloge H de la bascule 74 à travers l'inverseur 76. Une entrée D de la bascule 74 est maintenue en permanence à l'état "1". Des sorties Q et $\overline{Q}$ de la bascule 74 sont respectivement reliées à une entrée inverseuse d'inhibition 721 du premier circuit de transfert 72 et à une entrée inverseuse d'inhibition 771 du second circuit de transfert 77 qui forme un passage entre des sorties d'une bus de transmission d'octet $T_0$ à $T_7$ de la source 11 et les entrées $51_0$ à $51_7$ de l'unité 5 à travers le bus de transmission 73. La mise à l'état "1" de la sortie Q de la bascule 74 provoque la fermeture du circuit de transfert 72 et la mise à l'état "1" de l'entrée AT de la source 11, ce qui autorise la source 11 à transmettre un message. En outre, la sortie Q de la bascule 74 est reliée directement et à travers un inverseur 69 à des secondes entrées de portes NON-ET 66 et 68 ayant des sorties reliées aux entrées de la porte 67. Le passage à l'état "1" de la sortie Q de la bascule 74 met à l'état "0" l'entrée 50 de l'unité 5 et donc la mise en "mode de transmission" de message de la station. En outre, la mise à l'état "0" de la sortie complémentaire $\overline{Q}$ de la bascule 74 rend passant le second circuit de transfert 77 à travers lequel des octets d'un message peuvent être maintenant transférés de la source 11 vers l'unité 5.

Par contre, si la sortie 71S du comparateur 71 demeure à l'état "0", ce qui signifie que l'octet reçu est différent de l'octet de priorité délivré par la mémoire 70 et transmis par l'unité 5 dans le fil 2, et donc que la station considérée n'est pas prioritaire par rapport à une autre station ayant transmis simultanément un octet de priorité, l'état de la bascule 74 n'est pas modifié. L'entrée AT demeure à "0", ce qui n'autorise pas la source 11 à transmettre des octets de message à travers le second circuit de transfert 77 qui reste fermé.

La station considérée est "éconduite" et reste en "mode de réception" car le message transmis par la station prioritaire peut lui être destiné.

Lorsque la source 11 est autorisée à transmettre un message d'octets, la source 11 place successivement les octets aux sorties $T_0$ à $T_7$ et valide chaque octet en changeant l'état "0" à l'état "1" d'une sortie de transmission T0 de celle-ci. La sortie T0 est reliée à l'entrée 50 de l'unité 5 à travers une seconde entrée de la porte NON-ET 68 et la porte NON-ET 67 du circuit 6. L'octet présent aux bornes $T_0$ à $T_7$ et reçu aux bornes $51_0$ à $51_7$ de l'unité 5 à travers le circuit de transfert 77 et le bus de transmission 73 est mis en forme en un mot à N + 3 = bits transmis par la sortie 13 de l'unité 5 vers le support de message 2. Après la transmission de l'octet, l'unité 5 change l'état d'une sortie 55 de celle-ci relié à une entrée dite de transmission libre TL de la source 11, ce qui autorise la source à placer l'octet suivant du message aux bornes $T_0$ à $T_7$ et à le valider par une impulsion délivrée par la sortie T0, comme décrit précédemment.

Le message d'octets délivré par les bornes $T_0$ à $T_7$ de la source 11 débute par un octet, appelé ci-dessus "second octet". Le second octet contient l'adresse d'une station de réception ou d'une station de transmission et de réception à laquelle sont destinés les octets d'information du message succédant au second octet. L'adresse peut occuper la totalité du second octet, ce qui permet de prévoir au plus $2^N = 2^8 = 256$ stations dans le réseau. Cependant, l'adresse ne peut occuper que n bits dans le second octet, avec n < N, les N-n bits restants du second octet étant utilisés à d'autres fins, telles que signalisation ou alarme, par exemple, ou bien modification de débit comme on le verra en référence à la Fig. 3. Selon la réalisation illustrée à la Fig. 2, l'entier n est égal à 4.

A la fin du message, une sortie FT de la source 11 passe de l'état "0" à l'état "1" pour indiquer la fin de la transmission du message par la source. La sortie FT de la source 11 ainsi que les sorties 54 et 55 de l'unité 5 sont reliées respectivement aux entrées de la porte NON-ET 78 ayant une sortie 780 reliée à des entrées de remise à zéro RAZ des bascules 60 et 74. La sortie 54 de l'unité 5 est encore à l'état "1" suite à la réception d'au moins un octet, tel que le premier octet, par l'unité 5. La sortie 55 de l'unité 5 passe de l'état "0" à l'état "1" et, après un temps de garde prédéterminé, demeure à l'état "1" si aucun signal de transmission d'octet n'est délivré par la sortie T0 de la source 11 vers l'entrée 50 de l'unité 5. Dans ce cas, la sortie 780 de la porte 78 remet à "0" les sorties Q des bascules 60 et 74 et à "1" la sortie $\overline{Q}$ de la bascule 74. La porte 61 dans le circuit de surveillance et de changement d'état 6 ouvre la porte analogique 64 et donc met à "1" le fil de signalisation 3, ce qui indique à la station destinataire la fin du message et à toutes les autres stations, la libération du fil de transmission de message 2. En outre, le changement d'état de la bascule 74 provoque l'inhibition du second circuit de transfert 77 et rend passant le premier circuit de transfert 72. Il provoque également la mise à zéro de l'entrée d'autorisation de transmission AT et de l'entrée 50 de l'unité 5 à travers l'inverseur 69 et les portes 66 à 68, ce qui met de nouveau la station en "mode de réception" et l'unité 5 en attente d'une autre transmission de message.

Le circuit d'autorisation de réception 8 dans une station de réception, ou dans une station de transmission et de réception comme montré à la Fig. 2B, comprend le séquenceur 81, une mémoire organisée en pile FIFO 82, un circuit d'autorisation d'écriture 83, un comparateur logique de deux mots à n = 4 bits 84 et une mémoire morte d'adresse de la station à n = 4 bits 85. Des entrées de remise à zéro RAZ du séquenceur 81 et du circuit 83 sont reliées au support de signalisation 3 à travers la borne d'entrée 16 de la station. Par ailleurs, les N = 8 sorties $52_0$ à $52_7$ de l'unité logique de traitement et de commande 5 sont reliées à des entrées de données $82R_0$ à $82R_7$ de la pile 82 à travers le bus de réception 80. n = 4 sorties $52_0$ à $52_3$ sont également reliées à des premières entrées $84R_0$ à $84R_3$ du comparateur 84, et n = 4 secondes entrées $84A_0$ à $84A_3$ du comparateur 84 sont reliées à n sorties de la mémoire 85, ici sous la forme d'un circuit précâblé. Une sortie 841 est reliée à une entrée 831 du circuit 83 ayant une troisième entrée 832 reliée à une sortie 812 du séquenceur 81.

Lorsque l'état du fil de signalisation 3 passe de "1" à "0" suite à une demande de transmission de message par une station de transmission, le séquenceur 81 et le circuit 83 sont remis à zéro par leur entrée RAZ et sont en attente de la réception d'un message. Comme déjà dit, chaque fois qu'un mot à N + 3 bits est reçu par l'entrée 14 de l'unité 5, l'unité 5 délivre une impulsion de détection d'octet par la sortie 53 et présente l'octet correspondant aux sorties $52_0$ à $52_7$. Le séquenceur 81 compte alors les impulsions à son entrée 811. La sortie 812 du séquencer met à l'état "1" l'entrée 832 du circuit 83 après qu'une seconde impulsion correspondant à la réception de l'octet d'adresse du message est reçue, et demeure à cet état "1" jusqu'à une prochaine remise à 1 du fil 3 indiquant la fin du message. En outre, en réponse à chaque impulsion de détection de l'octet, une sortie 813 du séquenceur 81 applique une impulsion de demande d'écriture à une entrée DE de la pile 82, cette demande d'écriture n'étant effective que lorsque le circuit 83 a autorisé l'écriture d'octet dans la pile, comme on le verra ci-après.

Lorsque le premier octet dit de priorité du message est délivré par le bus 80, celui-ci n'est pas écrit dans la pile 82. En effet, la comparaison des n = 4 premiers bits de l'octet de priorité avec l'adresse de la station dans le comparateur 84 est négative, et le circuit 83 n'autorise pas une écriture dans la pile 82 à travers une sortie 833 du circuit 83 reliée à une entrée d'autorisation d'écriture AE de la pile 82. Lorsque le second octet dit d'adresse du message reçu est présent aux sorties $52_0$ à $52_7$ de l'unité 5, la comparaison des n premiers bits de l'octet d'adresse reçu avec les n bits d'adresse de la mémoire 85 dans le comparateur 84 est positive lorsque le message est destiné à la station. Dans ce cas, les entrées 831 et 832 du circuit 83 sont toutes deux à "1" après la réception du second octet, ce qui met à "1" l'entrée d'autorisation d'écriture AE de la pile 82. L'autorisation d'écriture dans la pile est maintenue jusqu'à la fin du message, c'est-à-dire jusqu'à la remise à zéro de la borne RAZ du circuit 83, et valide ainsi les impulsions de demande d'écriture délivrées par la sortie 813 du séqeuencer 81. Dans ces conditions, le message est écrit octet par octet dans la pile 82, à partir du troisième octet jusqu'au dernier octet du message.

Par contre, si les n premiers bits du second octet reçu sont respectivement différents des bits de l'adresse dans la mémoire 85, la sortie 841 du comparateur 84 demeure à "0" et le circuit 83 inhibe toute demande d'écriture par la sortie 813 du séquenceur 81. Aucun octet du message transmis dans le fil 3 n'est écrit dans la pile 82 puisque le message n'est pas destiné à la station.

Par ailleurs, des sorties de données $82S_0$ à $82S_7$ de la pile 82 sont respectivement reliées à des entrées de réception d'octet de message $R_0$ à $R_7$ de la source 11 de la station de réception, et une sortie de demande de réception DR de la source 11 est reliée à une entrée de demande de lecture DL de la pile 82. Chaque fois que la source 11 est disponible ou en attente pour traiter un message, la sortie DR émet des impulsions de demande de lecture qui commandent le transfert des octets mémorisés dans la pile 82 vers les entrées $R_0$ à $R_7$ suivant l'ordre chronologique des octets du message écrits précédemment dans la pile.

Selon une utilisation du réseau asynchrone conforme à l'invention, les stations du réseau sont des modules fonctionnels inclus dans un poste téléphonique numérique, comme montré à la Fig. 3. Chaque module comprend principalement, de préférence, un seul circuit intégré. Le poste contient au moins cinq modules de transmission et de réception $1_1$ à $1_5$ selon l'invention ainsi qu'une interface IN raccordée à une ligne téléphonique d'abonné LT. Les modules $1_3$ et éventuellement $1_5$ sont reliés à l'interface IN par un bus synchrone bidirectionnel B convoyant des canaux MIC de parole et de données multiplexés à débit élevé. Des fils H et T transmettent respectivement la fréquence d'horloge bit et la fréquence d'horloge trame du bus B. Des paquets de données sont échangés entre l'interface IN et le module $1_1$ via une liaison D. Les modules $1_1$ à $1_5$ sont également reliés par un fil de transmission de messages numériques asynchrones 2 et un fil de transmission de signalisation 3 pour constituer un réseau asynchrone selon l'invention. Dans le fil 2 transitent des données à débit faible, typiquement égal à 64 kbit/s, et des informations internes au poste et échangées entre les modules. Les informations internes sont par exemple un ordre transmis par le module $1_1$ pour que l'un des autres modules transmettent des données dans un canal déterminé du bus B, un ordre pour que le module $1_3$ transmette un signal particulier tel qu'un signal de sonnerie d'appel, ou bien tel qu'un numéro d'abonné appelé.

L'interface IN opère principalement pour démultiplexer et multiplexer les différents canaux de paroles et de données, les canaux de données étant destinés principalement au module $1_1$. Le module $1_1$ échange des messages de données selon un protocole connu d'échange de paquets à haut débit du type HDLC dans le support 2, principalement en direction du module $1_2$. Les paquets concernent des informations de signalisation, de données, de télémétrie ou analogue, et d'une manière plus générale, des informations concernant l'établissement et la rupture d'une communication téléphonique ainsi que la surveillance du bon fonctionnement du poste. Le module $1_2$ reçoit des paquets du module $1_1$ à travers le fil 2 en vue de traduire les informations transmises par le module $1_1$ en des ordres délivrés vers les autres modules $1_3$, $1_4$ et $1_5$ à travers le fil 2. Ces ordres concernent par exemple une émission d'un signal de sonnerie d'appel ou autre tonalité en vue du codage du signal, un ordre d'affichage d'un texte vers un écran dans le module $1_4$ pour un dialogue homme-machine. Le module $1_3$ concerne les fonctions strictement téléphoniques telles que codage-décodage, écoute amplifiée, amplification des signaux de parole reçus et transmis, génération de tonalités, commande de gains d'amplificaton, etc... Le module $1_4$ a pour source un clavier de numérotation associé à des afficheurs tels qu'un écran et à un organe de prise et rupture d'une communication, tel que bouton particulier ou combiné. Le module $1_4$ effectue des fonctions connues de tout poste téléphonique moderne, telles que la mémorisation de numéros d'appel, affichage de texte, etc...

Le cas échéant, d'autres modules, tels que le module auxiliaire $1_5$, peuvent être prévus, tels qu'une mémoire vive RAM pour augmenter la capacité de mémoire d'un module déterminé, ou tel qu'on poste de téléécriture, une interface optoélectronique de transmission de signaux desservant un combiné téléphonique distant à travers une liaison infrarouge, un module à écoute amplifiée du type "mains libres", ou un récepteur de données à haut débit.

Selon une autre variante de l'invention, certaines stations du réseau asynchrone peuvent traiter des messages à différents débits, de sorte que le fil de transmission 2 convoie des messages sérialisés à débits différents. Cette variante vise à résoudre deux problèmes. Lorsque les circuits des stations sont à réaliser en technologie CMOS, toute augmentation de débit des informations traitées se traduit par une augmentation de puissance. Un débit faible est donc souhaitable. Par ailleurs, lorsque des messages sont échangés entre des stations souvent sollicitées, ou lorsque des messages sont longs, un débit faible de transmission dans le fil 2 entraîne une occupation longue par un seul message au détriment d'autres messages courts en attente à transmettre. Un débit élevé est donc souhaitable dans ce cas.

Pour résoudre ces deux problèmes, il faut que des stations devant traiter lentement des informations puissent continuer à opérer avec un débit faible afin de diminuer la consommation énergétique, et que des stations devant par exemple transmettre des messages longs puissent transmettre ceux-ci à un débit élevé tout en conservant la possibilité d'opérer à un débit faible pour réaliser certaines fonctions.

Bien que plusieurs débits différents puissent être envisagés, on considère dans la suite deux débits, par exemple à 16 kbit/s et 64 kbit/s. Selon l'exemple d'utilisation montré à la Fig. 3, les modules $1_3$, $1_4$ et des modules auxiliaires $1_5$ fonctionnent à un débit faible, tandis que les modules $1_1$ et $1_2$ fonctionnent, soit au

débit faible, soit au débit élevé.

Selon cette variante, la prise du fil de transmission de messages 2 consistant principalement à transmettre un mot de priorité et un mot d'adresse s'effectue à débit faible, comme décrit ci-dessus en référence aux Figs. 2A et 2B. Une. modification éventuelle de débit est signalée par plusieurs bits dans les N-n bits restants du second mot transmis du message et contenant le mot d'adresse à n bits. Par exemple, dans le cas présent relatif à deux débits, un bit prédéterminé d'indication de débit est à l'état "0" pour signaler la transmission d'un champ d'information de message avec le débit faible, et est à l'état "1" pour signaler la transmission d'un champ d'information de message avec le débit élevé. Ainsi, la modification de débit dans le message n'intervient qu'après la fin du second mot du message et le débit choisi est maintenu jusqu'à la fin du message.

Dans une station de transmission et de réception fonctionnant à multidébit, comme montré aux Figs. 2A et 2B, une sortie de demande de transmission à débit élevé TDE de la source 11 passe à l'état "1" après que le second octet d'un message ait été transmis par les sorties $T_0$ à $T_7$ et jusqu'à la fin du message, lorsque le message est à transmettre avec le débit élevé. L'état "1" à la sortie TDE est détecté par une entrée 56 de l'unité 5 qui, selon cette variante, contient un commutateur de signaux d'horloge aux débits faible et élevé. Dans ce cas, le commutateur délivre le signal d'horloge à débit élevé pour transmettre le message à partir du troisième mot. Lorsque plusieurs débits différents sont envisagés, la source 11 délivre à l'unité 5 un mot représentatif du débit auquel est transmis le message, et sélectionnant le débit dans le commutateur.

Dans une station de transmission et de réception ou dans une station de réception à multidébit, lorsqu'un message doit être reçu, l'unité 5 détecte le second mot du message, et notamment examine l'état du bit d'indication de débit. Lorsque le débit est élevé, un commutateur de signaux d'horloge analogue au précédent, sélectionne le signal d'horloge à débit élevé en vue de retransmettre le reste du message au débit élevé via le bus 80. L'unité 5 comprend ainsi des moyens adaptables aux débits de transmission dans le fil 3, de tels moyens étant inclus dans l'unité 5 montrée à la Fig. 2A moyennant quelques modifications, ou étant prévus à l'extérieur de l'unité 5.

**Revendications**

1. Réseau numérique comprenant des premier et second fils conducteurs de transmission (2, 3) et plusieurs stations de transmission et de réception ($1_1$, $1_{M-1}$) reliées auxdits fils de transmission, chaque station étant susceptible de transmettre et de recevoir des messages de bits sérialisés au moins à un débit prédéterminé à travers le premier fil de transmission (2) et étant identifiée par un mot d'adresse respectif, chaque message débutant par un mot d'adresse identifiant une station destinataire du message, le second fil de transmission (3) étant relié à toutes les stations ($1_1$, $1_{M-1}$) et étant à des premier et second états logiques (haut "1" et bas "0") lorsque le premier fil de transmission (2) ne convoie pas de message et est occupé par un message respectivement, les stations de transmission et de réception ($1_1$, $1_{M-1}$) étant ordonnées en fonction de mots de priorité respectifs, chaque message transmis par une station contenant le mot de priorité assigné à la station et précédant le mot d'adresse dans le message, et chaque station de transmission et de réception ($1_1$, $1_{M-1}$) comprenant des moyens de changement d'état (6) pour passer le second fil (3) de transmission du premier état ("1") au second état "0" en réponse à une demande de transmission de message (DT) de la station et des moyens (5, 7) pour autoriser la transmission d'un message complet dans le premier fil de transmission (2) suite au passage du premier au second état du second fil de transmission (3) et à la réception du mot de priorité de la station transmis par ladite station à travers le premier fil de transmission (2), caractérisé en ce que

ledit réseau numérique est de type asynchrone et le changement du premier au second état ("1" à "0") du second fil de transmission (3) est effectué indépendamment du débit des bits de message par les moyens de changement d'état (6) dans la station et intervient au terme d'une première durée prédéterminée ($\varepsilon$) succédant à une demande de transmission de message (DT) de la station qui ne dépend que du temps de propagation dans les composants électroniques des moyens de changement d'état (6),

en ce que les moyens de changement d'état (6) dans la station ne changent pas l'état du second fil de transmission (3) en réponse à une demande de transmission de message (DT) de la station qui intervient après la première durée prédéterminée ($\varepsilon$) succédant à une demande de transmission d'une autre station et lorsque le second fil de transmission (3) est au second état ("0"), et

en ce que, après une seconde durée prédéterminée ($T_0$) succédant au changement du premier au second état ("1" à "0") du second fil de transmission (3) et indépendante du débit des bits de message, les moyens pour autoriser la transmission (5, 7) dans la station transmettent entièrement le mot sérialisé de priorité de la station dans le premier fil de transmission (2), puis comparent en totalité ledit mot de priorité de la station transmis ($71T_0$ à $71T_7$) et un mot de priorité ($71R_0$ à $71R_7$) reçu à travers le premier fil de transmission (2) suite à la transmission dudit mot de priorité par ladite station, ou à la transmission d'un mot de priorité par au moins une autre station ayant demandé quasi-simultanément une transmission de message (DT) pendant ladite première durée prédéterminée ($\varepsilon$), et enfin autorisent la transmission d'un message par ladite station à partir d'un mot d'adresse lorsque lesdits mots de priorité transmis et reçu comparés ($71T_0$ à $71T_7$; $71R_0$ à $71R_7$) sont identiques.

2. Réseau conforme à la revendication 1, caractérisé en ce que chaque mot de priorité contient une série de bits consécutifs ayant un premier état prédéterminé ("0") précédant ou succédant à une série de bits ayant un second état prédéterminé ("1"), les stations de transmission et de réception ($1_1$, $1_{M-1}$) étant ordonnées de manière que les nombres de bits au premier état prédéterminé ("0") dans les mots de priorité aillent en décroissant à partir de la station la plus prioritaire à la station la moins prioritaire, deux mots de priorité transmis quasiment simultanément dans le premier fil de transmission (2) par deux stations ayant demandé des transmissions de message pendant ladite première durée prédéterminée ($\varepsilon$) étant transformés en le mot de priorité de la station la plus prioritaire des deux stations.

3. Réseau conforme à la revendication 1 ou 2, caractérisé en ce que les stations ($1_1$, $1_{M-1}$) sont reliées aux premier et second fils de transmission (2, 3) par des liaisons bidirectionnelles en collecteur ouvert (14 à 16).

4. Réseau conforme à l'une quelconque des revendications 1 à 3, caractérisé en ce que les moyens de changement d'état (6) passent le second fil de transmission (3) du second état ("0") au premier état ("1") en réponse à une fin de transmission de message (FT, RAZ) à partir de la station ($1_1$, $1_{M-1}$).

5. Réseau conforme à l'une quelconque des revendications 1 à 4, caractérisé en ce que chaque station de transmission et de réception ($1_1$, $1_{M-1}$) comprend des moyens (8) pour autoriser la réception d'un message complet convoyés par le premier fil de transmission (2) suite au passage du premier au second état du second fil de transmission (3), à la détection d'un premier mot de priorité et enfin, à la détection du mot d'adresse identifiant ladite station.

6. Réseau conforme à la revendication 5, caractérisé en ce que les moyens pour autoriser la réception (8) comprennent des moyens (81) pour compter des mots dans un message en réponse au changement du premier au second état ("1" à "0") du second fil de transmission (3), des moyens (84, 85) pour comparer chaque mot ($84R_0$ à $84R_3$) contenu dans le message avec le mot d'adresse ($84A_0$ à $84A_3$) identifiant ladite station ($1_1$, $1_{M-1}$) en tant que station destinataire du message, des moyens de mémorisation (82) commandés en écriture par les moyens pour compter (81), et des moyens (83) pour autoriser l'écriture des mots du message succédant au mot d'adresse dans les moyens de mémorisation (82) dès que deux mots du message sont comptés et deux mots comparés sont identiques après le passage du premier au second état du second support de transmission (3).

7. Réseau conforme à la revendication 6, caractérisé en ce que les moyens de mémorisation (82) sont organisés en pile FIFO.

8. Réseau conforme à la revendication 6 ou 7, caractérisé en ce que chaque mot d'adresse contient un nombre de bits (n) inférieur au nombre de bits (N) du mot d'adresse et identifiant la station respective, lesdits bits en nombre inférieur (n) étant seulement comparés aux bits ayant des mêmes rangs dans les mots de message.

9. Réseau conforme à l'une quelconque des revendications 1 à 8, caractérisé en ce qu'il comprend des stations de réception ($1_2$, $1_3$, $1_M$) reliées aux premier et second fils de transmission (2, 3), chaque station de réception étant susceptible de recevoir des messages transmis par lesdites stations de transmission et de réception ($1_1$, $1_{M-1}$) et contenant le mot d'adresse identifiant la station de réception, et comprenant des moyens pour autoriser la réception de message (8) conformes à l'une quelconque des revendications 6 à 9.

10. Réseau conforme à l'une quelconque des revendications 1 à 9, caractérisé en ce que le premier fil de transmission (3) convoie des messages ayant des débits différents (16 et 64 kbit/s), et en ce que des stations de transmission et de réception ($1_1$, $1_2$, Fig. 3) et, le cas écheant, des stations de réception fonctionnent à des débits différents pour traiter les messages.

11. Réseau conforme à la revendication 10, caractérisé en ce que chaque mot d'adresse dans un message contient un nombre de bits d'adresse (n) identifiant la station respective et un nombre de bits représentatifs du débit auquel sont transmis les mots du message succédant au mot d'adresse, les mots de priorité et les mots d'adresse de tous les messages étant transmis à un débit prédéterminé (16 kbit/s) de préférence inférieur aux autres débits.

12. Réseau conforme à l'une quelconque des revendications 1 à 11, caractérisé en ce que les stations constituent des modules fonctionnels ($1_1$ à $1_5$) dans un poste téléphonique numérique (Fig. 3).

## Patentansprüche

1. Digitales Netz, aufweisend erste und zweite Übertragungsleitungen (2, 3) und mehrere mit den übertragungsleitungen verbundene Übertragungs- und Empfangsstationen ($1_1$, $1_{M-1}$), wobei jede Station geeignet ist, Nachrichten mit seriengewandelten Bits wenigstens mit einer vorbestimmten Übertragungsrate über die erste Übertragungsleitung (2) zu übertragen und zu empfangen und durch ein entsprechendes Adressenwort identifiziert wird, wobei jede Nachricht mit einem eine Empfangsstation der Nachricht identifizierenden Adressenwort anfängt, wobei die zweite Übertragungsleitung (3) mit sämtlichen Stationen ($1_1$, $1_{M-1}$) verbunden ist und sich in ersten und zweiten logischen Zuständen (hoch "1" und tief "0") befindet, wenn die erste Übertragungsleitung (2) keine Nachricht übermittelt und entsprechend durch eine Nachricht belegt ist, wobei die Übertragungs- und Empfangsstationen ($1_1$, $1_{M-1}$) abhängig von entsprechenden Prioritätswörtern geordnet sind, wobei jede durch eine Station übertragene Nachricht das der Station zugeordnete Prioritätswort enthält und das Adressenwort in der Nachricht anführt und wobei jede Übertragungs- und Empfangsstation ($1_1$, $1_{M-1}$) Mittel zur Zustandsänderung (6), um die zweite Übertragungsleitung (3) vom ersten Zustand ("1") zum zweiten Zustand ("0") ansprechend auf

EP 0 178 205 B1

eine Nachrichtenübertragungsanforderung (DT) der Station zu überführen, und Mittel (5, 7) aufweist, um die Übertragung einer vollständigen Nachricht im ersten Übertragungsdraht (2) folgend auf die Überführung der zweiten Übertragungsleitung (3) vom ersten in den zweiten Zustand und beim Empfang des von der Station über die erste Übertragungsleitung (2) übertragenen Prioritätswortes der Station zu gestatten, dadurch gekennzeichnet,

— daß das digitale Netz vom asynchronen Typ ist und die Änderung der zweiten Übertragungsleitung (3) vom ersten in den zweiten Zustand ("1") zu ("0") unabhängig von der Übertragungsrate der Nachrichtenbits durch die Mittel zur Zustandsänderung (6) in der Station ausgeführt wird und sich auf das Ende einer ersten vorbestimmten Zeitdauer ($\varepsilon$) auswirkt, die auf eine Anforderung zur Nachrichtenübertragung (DT) der Station folgt, die lediglich von der Übertragungszeit in den elektrischen Bauteilen der Mittel zur Zuständsänderung (6) abhängt,

— daß die Mittel zur Zustandsänderung (6) in der Station den Zustand der zweiten Übertragungsleitung (3) ansprechend auf eine Anforderung zur Nachrichtenübertragung (DT) der Station nicht ändern, die sich nach der ersten vorbestimmten Zeitdauer ($\varepsilon$) folgend auf eine Übertragungsanforderung einer anderen Station auswirkt, und wenn sich die zweite Übertragungsleitung (3) im zweiten Zustand "0") befindet, und

— daß die Mittel zur Gestattung der Übertragung (5, 7) in der Station nach einer zweiten vorbestimmten Zeitdauer ($T_0$) folgend auf die Änderung der zweiten Übertragungsleitung (3) vom ersten zum zweiten Zustand ("1" zu "0") und unabhängig von der Übertragungsrate der Nachrichtenbits das seriengewandelte Prioritätswort der Station in der ersten Übertragungsleitung (2) vollständig übertragen, dann das übertragene Prioritätswort der Station ($71T_0$ bit $71T_7$) und ein Prioritätswort ($71R_0$ bis $71R_7$) insgesamt vergleichen, das über die erste Übertragungsleitung (2) folgend auf die Übertragung des Prioritätswortes durch die Station oder die Übertragung eines Prioritätswortes durch wenigstens eine weitere Station, die quasi gleichzeitig eine Nachrichtenübertragung (DT) während der ersten vorbestimmten Zeitdauer ($\varepsilon$) angefordert hat, empfangen worden ist, und schließlich die Übertragung einer Nachricht durch die Station ausgehend von einem Adressenwort gestatten, wenn die übertragenen und empfangenen, vergleichenen Prioritätswörter ($71T_0$ bis $71T_7$; $71R_0$ bis $71R_7$) identisch sind.

2. Netz nach Anspruch 1, dadurch gekennzeichnet, daß jedes Prioritätswort eine Folge von aufeinanderfolgenden Bits enthält, die einen ersten vorbestimmten Zustand ("0") aufweisen, vorhergehend oder folgend auf eine Folge von Bits, die einen zweiten vorbestimmten Zustand ("1") aufweisen, wobei die Übertragungs- und Empfangsstationen ($1_1$, $1_{M-1}$) derart geordnet sind, daß die Zahlen von Bits im ersten vorbestimmten Zustand ("0") in den Prioritätswörtern ausgehend von der Station mit der höchsten Priorität zur Station mit der niedrigsten Priorität abnehmend verlaufen, wobei zwei quasi gleichzeitig in der ersten Übertragungsleitung (2) durch zwei Stationen, die während der ersten vorbestimmten Zeitdauer ($\varepsilon$) Nachrichtenübertragungen angefordert haben, übertragene Prioritätswörter in das Prioritätswort der Station mit der höheren Priorität der beiden Stationen umgewandelt werden.

3. Netz nach Anspruch 1 oder 2, dadurch gekennzeichnet, daß die Stationen ($1_1$, $1_{M-1}$) durch Zweirichtungsverbindungen mit offenem Kollektor (14 bis 16) mit den ersten und zweiten Übertragungsleitungen (2, 3) verbunden sind.

4. Netz nach einem beliebigen der Ansprüche 1 bis 3, dadurch gekennzeichnet, daß die Mittel zur Zustandsänderung (6) die zweite Übertragungsleitung (3) vom zweiten Zustand ("0") in den ersten Zustand ("1") ansprechend auf ein Nachrichtenübertragungsende (FT, RAZ) ausgehend von der Station ($1_1$, $1_{M-1}$) überführen.

5. Netz nach einem beliebigen der Ansprüche 1 bis 4, dadurch gekennzeichnet, daß jede Übertragungs- und Empfangsstation ($1_1$, $1_{M-1}$) Mittel (8) umfaßt, um den Empfang einer vollständigen Nachricht zu gestatten, übermittelt durch die erste Übertragungsleitung (2) folgend auf die Überführung der zweiten Übertragungsleitung (3) vom ersten in den zweiten Zustand bei Erfassung eines ersten Prioritätswortes und schließlich bei der Erfassung des die Station identifizierenden Adressenwortes.

6. Netz nach Anspruch 5, dadurch gekennzeichnet, daß die Mittel zur Gestattung des Empfangs (8) Mittel (81) zum Zählen der Wörter in einer Nachricht ansprechend auf die Änderung der zweiten Übertragungsleitung (3) vom ersten in den zweiten Zustand ("1" zu "0"), Mittel (84, 85) zum Vergleichen jedes in der Nachricht enthaltenen Wortes ($84R_0$ bis $84R_3$) mit dem die Station ($1_1$, $1_{M-1}$) als Empfangsstation der Nachricht identifizierenden Adressenwort ($84A_0$ bis $84A_3$), durch die Mittel zum Zählen (81) im Schreibmodus gesteuerte Speichermittel (82) und Mittel (83) zum Gestatten des Schreibens der Nachrichtenwörter folgend auf das Adressenwort in den Speichermitteln (82) aufweisen, sobald zwei Nachrichtenwörter gezählt sind und zwei verglichene Wörter identisch sind, nach der Überführung des zweiten Übertragungsmittels (3) vom ersten Zustand in den zweiten.

7. Netz nach Anspruch 6, dadurch gekennzeichnet, daß die Speichermittel (82) im Speicherblock (FIFO) organisiert sind.

8. Netz nach Anspruch 6 oder 7, dadurch gekennzeichnet, daß jedes Adressenwort eine Anzahl von Bits (n) enthält, die niedriger als die Anzahl von Bits (N) des Adressenwortes ist und die entsprechende Station identifiziert, wobei die in der Zahl niedrigeren Bits (n) lediglich mit den Bits verglichen werden, die dieselben Ränge in den Nachrichtenwörtern aufweisen.

9. Netz nach einem beliebigen der Ansprüche 1 bis 8, dadurch gekennzeichnet, daß es mit den ersten und zweiten Übertragungsleitungen (2, 3) verbundene Empfangsstationen ($1_2$, $1_3$, $1_M$) aufweist, wobei jede

# EP 0 178 205 B1

Empfangsstation geeignet ist, durch die Übertragungs- und Empfangsstationen ($1_1$, $1_{M-1}$) übertragene Nachrichten und das die Empfangsstation identifizierende Adressenwort enthaltende Nachrichten zu empfangen, und Mittel (8) gemäß einem beliebigen der Ansprüche 6 bis 9 aufweist, um den Nachrichtenempfang zu gestatten.

10. Netz nach einem beliebigen der Ansprüche 1 bis 9, dadurch gekennzeichnet, daß die erste Übertragungsleitung (3) Nachrichten übermittelt, die verschiedene Übertragungsraten (16 und 64 kBit/s) aufweisen, und daß die Übertragungs- und Empfangsstationen ($1_1$, $1_2$, Fig. 3) und gegebenenfalls die Empfangsstationen mit unterschiedlichen Übertragungsraten zur Verarbeitung der Nachrichten arbeiten.

11. Netz nach Anspruch 10, dadurch gekennzeichnet, daß jedes Adressenwort in einer Nachricht eine die entsprechende Station identifizierende Anzahl von Adressenbits (n) und eine Anzahl von Bits enthält, die die Übertragungsrate darstellen, mit der die Nachrichtenwörter folgend auf das Adressenwort übertragen werden, wobei die Prioritätswörter und die Adressenwörter sämtlicher Nachrichten mit einer vorbestimmten Übertragungsrate (16kBits/s) vorzugsweise niedriger als die anderen Übertragungsraten übertragen werden.

12. Netz nach einem beliebigen der Ansprüche 1 bis 11, dadurch gekennzeichnet, daß die Stationen Funktionsmodule ($1_1$ bis $1_5$) in einer digitalen Fernsprechstelle bilden (Fig. 3).

**Claims**

1. A digital network comprising first and second transmission conductor wires (2, 3) and several transmitting and receiving stations ($1_1$, $1_{M-1}$) connected to said transmission wires, each station being capable of transmitting and receiving messages comprising serialised bits at least at a predetermined rate through the first transmission wire (2) and being identified by a respective address word, each message beginning with an address word identifying a target station for the message, the second transmission wire (3) being connected to all the stations ($1_1$, $1_{M-1}$) and being in the first and second logic states (high "1" and low "0") when the first transmission wire (2) does not convey a message and is occupied by a message respectively, the transmitting and receiving stations ($1_1$, $1_{M-1}$) being ordered as a function of respective priority words, each message transmitted by a station containing the priority word which is allocated to the station and precedes the address word in the message, and each transmitting and receiving station ($1_1$, $1_{M-1}$) comprising state-changing means (6) so as to pass the second transmission wire (3) from the first state ("1") to the second state ("0") in response to a command to transmit a message (DT) from the station and means (5, 7) for authorising the transmission of a complete message in the first transmission wire (2) after the second transmission wire (3) has passed from the first to the second state and on reception of the priority word of the station transmitted by said station through the first transmission wire (2), characterised in that said digital network is of the asynchronous type and the change from the first to the second state ("1" to "0") of the second transmission wire (3) is effected independently of the message bit rate by state-changing means (6) in the station and takes place at the end of a first predetermined period ($\varepsilon$) following a message transmission command (DT) from the station which depends only on the propagation time in the electronic components of the state-changing means (6), in that the state-changing means (6) in the station do not change the state of the second transmission wire (3) in response to a command to transmit a message (DT) from the station which takes place after the first predetermined period ($\varepsilon$) following a command for transmission from another station and when the second transmission wire (3) is in the second state ("0"), and in that after a second predetermined period ($T_0$) following the change from the first to the second state ("1" to "0") of the second transmission wire (3) and independent of the message bit rate, the means for authorising transmission (5, 7) in the station transmit the serialised priority word from the station completely in the first transmission wire (2) then compare said transmitted priority word from the station ($71T_0$ to $71T_7$) in its entirety and a priority word ($71R_0$ to $71R_7$) received through the first transmission wire (2) following the transmission of said priority word by said station or the transmission of a priority word by at least one other station which almost simultaneously commanded the transmission of a message (DT) during said first predetermined period ($\varepsilon$), and finally authorise the transmission of a message by said station starting from an address word when said compared transmitted and received priority words ($71T_0$ to $71T_7$; $71R_0$ to $71R_7$) are identical.

2. A network according to claim 1, characterised in that each priority word contains a series of consecutive bits having a first predetermined state ("0") preceding or following a series of bits having a second predetermined state ("1"), the transmitting and receiving stations ($1_1$, $1_{M-1}$) being ordered such that the numbers of bits in the first predetermined state ("0") in the priority words decrease from the highest priority station to the lowest priority station, two priority words transmitted almost simultaneously in the first transmission wire (2) by two stations which have commanded message transmission during said first predetermined period ($\varepsilon$) being transformed into the priority word of the higher priority station of the two stations.

3. A network according to claim 1 or 2, characterised in that the stations ($1_1$, $1_{M-1}$) are connected to the first and second transmission wires (2, 3) by bidirectional connections with open collector (14 to 16).

4. A network according to any one of claims 1 to 3, characterised in that the state-changing means (6) pass the second transmission wire (3) from the second state ("0") to the first state ('1") in response to an end of transmission of a message (FT, RAZ) from the staion ($1_1$, $1_{M-1}$).

12

5. A network according to any one of claims 1 to 4, characterised in that each transmitting and receiving station ($1_1$, $1_{M-1}$) comprises means (8) for authorising the reception of a complete message which are conveyed by the first transmission wire (2) after passage from the first to the second state of the second transmission wire (3), the detection of a first priority word and, finally, the detection of an address word identifying said station.

6. A network according to claim 5, characterised in that the means for authorising reception (8) comprise means (81) for counting the words in a message in response to the change from the first to the second state ("1" to "0") of the second transmission wire (3), means (84, 85) for comparing each word ($84R_0$ to $84R_3$) contained in the message with the address word ($84A_0$ to $84A_3$) identifying said station ($1_1$, $1_{M-1}$) as a target station for the message, memory means (82) controlled in writing by the counting means (81), and means (83) for authorising the message words following the address word to be written in the memory means (82) as soon as two message words are counted and two compared words are identical after the second transmission support (3) has passed from the first to the second state.

7. A network according to claim 6, characterised in that the memory means (82) are organised in a FIFO battery.

8. A network according to claim 6 or 7, characterised in that each address word contains a number of bits (n) which is smaller than the number of bits (N) of the address word and identifies the respective station, said bits of which there are a smaller number (n) being compared only with the bits having the same ranks in the message words.

9. A network according to any one of claims 1 to 8, characterised in that it comprises receiving stations ($1_2$, $1_3$, $1_M$) which are connected to the first and second transmission wires (2, 3), each receiving station being capable of receiving messages transmitted by said transmitting and receiving stations ($1_1$, $1_{M-1}$) and containing the address word identifying the receiving station and comprising means for authorising the reception of a message (8) according to any one of claims 6 to 9.

10. A network according to any one of claims 1 to 9, characterised in that the first transmission wire (3) conveys messages having different rates (16 and 64 kbit/s), and in that the transmitting and receiving stations ($1_1$, $1_2$, Figure 3) and, if applicable, the receiving stations operate at different rates for processing the messages.

11. A network according to claim 10, characterised in that each address word in a message contains a number of address bits (n) identifying the respective station and a number of bits representing the rate at which the message words following the address word are transmitted, the priority words and the address words of all the messages being transmitted at a predetermined rate (16 kbit/s) which is preferably lower than the other rates.

12. A network according to any one of claims 1 to 11, characterised in that the stations constitute functional modules ($1_1$ to $1_5$) in a digital telephone set (Figure 3).

# FIG.1

MESSAGE ASYNCHRONE

SIGNALISATION

HORLOGE

INTERFACE (FIG.2)

SOURCE

STATIONS DE RECEPTION

STATIONS DE TRANSMISSION ET DE RECEPTION

EP 0 178 205 B1

FIG. 2 A

EP 0 178 205 B1

FIG.2B

de ou
vers FIG.2A

EP 0 178 205 B1

FIG.3

AUTRE MODULE

MODULE dialogue homme-machine (clavier+écran)

MODULE (codage décodage parole)

MODULE (ordres)

MODULE (paquets)

INTERFACE S

IT

Données synchrones
Horloge bit
Horloge trame

signalisation

messages asynchrones

4